# FASCICULE DE BREVET EUROPEEN

(11) **EP 3 020 109 B1**
(45) Date de publication et mention de la délivrance du brevet: **30.08.2017**
(21) Numéro de dépôt: 14747067.8
(22) Date de dépôt: 30.06.2014
(51) Int. Cl.: H02J 1/00, F02N 11/08, H02J 7/00

(54) **SYSTÈME DE STABILISATION D'UNE TENSION D'ALIMENTATION D'UN RÉSEAU ÉLECTRIQUE DE BORD D'UN VÉHICULE AUTOMOBILE**
SYSTEM ZUR STABILISIERUNG DER VERSORGUNGSSPANNUNG EINES BORDNETZES FÜR EIN KRAFTFAHRZEUG
SYSTEM FOR STABILISING A SUPPLY VOLTAGE OF AN ON-BOARD ELECTRICAL SYSTEM OF A MOTOR VEHICLE

(30) Priorité: 12.07.2013 FR 1356864
(43) Date de publication de la demande: 18.05.2016
(73) Titulaire: Valeo Equipements Electriques Moteur, 94046 Créteil Cedex (FR)
(72) Inventeur: CHIAPPORI, Guido, F-59000 Lille (FR); CHEMIN, Michaël, F-94510 La Queue en Brie (FR); DELARUE, Philippe, F- 59655 Villeneuve D'ascq Cedex (FR); LE MOIGNE, Philippe, F-59651 Villeneuve d'Ascq Cedex (FR)
(86) Numéro de dépôt international: PCT/FR2014/051663
(87) Numéro de publication internationale: WO 2015/004366

(56) Documents cités:
- WO-A2-2012/038258
- DE-A1-102009 047 497
- DE-A1-102010 039 875

## Description

### DOMAINE TECHNIQUE DE L'INVENTION.

De manière générale, l'invention concerne le domaine des démarreurs de moteurs thermiques dans les véhicules automobiles. Plus particulièrement, l'invention concerne un système de stabilisation d'une tension d'alimentation d'un réseau électrique de bord du véhicule au moment du démarrage.

### ARRIERE PLAN TECHNOLOGIQUE DE L'INVENTION.

Lors de la mise sous tension d'un démarreur pour assurer le démarrage du moteur thermique du véhicule, il se produit un courant d'appel important qui est proche du niveau de courant de court-circuit du démarreur, à savoir, un courant de l'ordre de 1000 ampères. Ce courant décroît ensuite en intensité à mesure que l'induit du démarreur, correspondant au rotor de la machine, monte en vitesse.

A ce pic initial de courant correspond une chute conséquente de la tension aux bornes de la batterie. D'autres chutes de tension moins importantes se produisent ensuite pendant la phase de démarrage et correspondent à des passages par des points morts hauts successifs du moteur thermique.

Le développement de démarreurs dits « renforcés » adaptés pour des systèmes d'arrêt/ relance automatique du moteur thermique (systèmes dits « Stop/Start » ou « Stop & Go » en terminologie anglaise) imposent aujourd'hui de nouvelles contraintes aux équipementiers automobiles, relatives au respect de seuils de tension minima de la batterie lors de l'appel de courant à la mise sous tension du démarreur. Ainsi, dans leurs cahiers de charges, les constructeurs automobiles définissent un premier seuil de tension compris habituellement entre 7 et 9 volts en dessous duquel ne doit pas descendre la tension de batterie. Pour les chutes de tension suivantes, correspondant aux points morts hauts du moteur thermique, la tension de batterie doit rester supérieure à un second seuil de tension compris habituellement entre 8 et 9 volts. Pendant le démarrage du moteur thermique, la tension du réseau de bord du véhicule reste ainsi à une valeur suffisante pour garantir le fonctionnement attendu des équipements des véhicules.

Les démarreurs renforcés ont généralement une puissance supérieure aux démarreurs classiques de manière à obtenir un démarrage rapide pour davantage de confort des utilisateurs. Il en découle un courant d'appel à la mise sous tension plus élevé et donc une première chute de la tension de batterie qui va au-delà des valeurs habituelles et cela en regard d'exigences élevées.

Ce problème de la chute de tension devient encore plus important dans le cas d'un véhicule équipé d'un système « Stop/Start ». Du fait de la fréquence élevée des redémarrages par rapport au démarrage initial d'un véhicule classique, les occupants du véhicule peuvent subir une gêne, et, de plus, la sécurité de certains équipements, comme une direction assistée, peut être compromise.

Dans la technique antérieure, des solutions ont été proposées au problème exposé ci-dessus.

Une première solution très utilisée, divulguée par la société VALEO EQUIPEMENTS ELECTRIQUES MOTEUR dans la demande de brevet FR2843841, consiste à connecter des condensateurs, ou tout autre source de tension secondaire, en série avec la batterie pendant le démarrage pour augmenter la tension d'alimentation du démarreur, et ainsi stabiliser la tension du réseau de bord.

Une solution analogue connue de l'entité inventive repose sur l'utilisation de convertisseurs électroniques élévateurs de tension afin d'éviter un niveau de tension trop bas sur le réseau de bord.

L'inconvénient majeur de ces condensateurs, convertisseurs, ou sources de tensions secondaires, réside dans les surcoûts substantiels qu'ils introduisent.

Une autre solution connue propose de commander le démarreur au moyen de deux relais, une temporisation et une résistance de limitation de courant. Dans une première phase de fonctionnement dont la durée est déterminée par la temporisation, une résistance additionnelle est insérée en série dans le circuit électrique de puissance du démarreur et limite le pic de courant initial. Dans une seconde phase de fonctionnement, la résistance additionnelle est sortie du circuit de puissance afin de permettre le passage d'un courant suffisant dans l'induit du démarreur et d'autoriser une montée en vitesse de celui-ci.

Outre l'inconvénient du coût additionnel qu'implique le relais de commande supplémentaire, la temporisation et la résistance de limitation de courant, l'introduction de ce relais supplémentaire, qui comporte des pièces mécaniques mobiles soumises à usure, a un impact négatif sur la tenue du démarreur en termes de nombre de cycles de démarrage que doit pouvoir supporter sans encombre le démarreur. La tenue du démarreur en nombre de cycles de démarrage est une contrainte particulièrement sévère pour les démarreurs destinés à des systèmes Stop/ Start. En effet, il est demandé à de tels démarreurs de tenir environ 300 000 cycles de démarrage, soit dix fois plus que les 30 000 cycles environ demandés aux démarreurs classiques.

Il a également été proposé de connecter un interrupteur constitué d'un transistor de puissance fonctionnant en commutation en série avec le démarreur. Le dispositif de commande du transistor mesure la tension de la batterie, et, en fonction de sa valeur, ouvre ou ferme l'interrupteur. L'interrupteur est commuté à l'état ouvert périodiquement, chaque fois que la tension de batterie chute en dessous d'une tension de référence.

Le principal inconvénient de cette solution est la commutation du courant générant des pics de tension inverse importants qui peuvent endommager la batterie.

De plus, un autre problème majeur est la compatibilité électromagnétique (CEM) du fait de la commutation de courants à des niveaux élevés.

Plus récemment la société VALEO EQUIPEMENTS ELECTRIQUES MOTEUR a proposé l'utilisation d'un filtre passe-bas pour restreindre l'appel de courant au démarrage et limiter ainsi la chute de tension.

Tel que cela est décrit dans la demande de brevet FR2978499, le principe de cette solution est un filtre inductif de grande puissance couplé à un circuit magnétique, connecté en série avec le moteur du démarreur.

Un inconvénient de ce filtre est que ses caractéristiques doivent être adaptées au modèle de démarreur utilisé. De plus, le circuit magnétique, qui présente un noyau ayant aussi une certaine masse, ne limite le courant qu'à une valeur imprécise, et, de ce fait, la tension de la batterie peut tomber en dessous de la valeur nominale.

Au vu de ces diverses solutions connues, il existe donc un besoin pour en supprimer les inconvénients, ou du moins, les atténuer.

On identifiera également le document WO 2012/038258 A2 publié le 29 mars 2012 qui décrit également un système de stabilisation d'une tension d'alimentation d'un réseau électrique de bord du véhicule au moment du démarrage. Cependant ce document ne décrit pas de résistance variable constituée de plusieurs transistors de puissance en parallèle.

On identifiera enfin le document DE 10 2009 047497 A1 publié le 9 juin 2011.

### DESCRIPTION GENERALE DE L'INVENTION.

La présente invention vise donc un système de stabilisation d'une tension d'alimentation d'un réseau électrique de bord d'un véhicule automobile.

Le système dont il s'agit est du type de ceux limitant une variation de tension d'une batterie alimentant le réseau électrique de bord au moment d'un démarrage d'un moteur thermique du véhicule au moyen d'un démarreur électrique relié à ce réseau.

Conformément à l'invention, le système comprend une résistance variable commandée en régime linéaire en fonction de la variation de tension, ladite résistance variable étant connectée en série avec la batterie et le démarreur.

Cette résistance est contrôlée par une boucle de courant principale en fonction d'une intensité de référence générée par une boucle de tension en fonction de la variation de tension de la batterie par rapport à une tension de référence.

Elle est constituée de plusieurs transistors de puissance en parallèle.

On tire bénéfice du fait que ces transistors fonctionnent en régime saturé si la de tension d'alimentation est supérieure ou égale en valeur absolue à la tension de référence en valeur absolue, ou en régime linéaire si la tension d'alimentation est inférieure en valeur absolue à la tension de référence en valeur absolue.

La boucle de courant principale est avantageusement formée de plusieurs boucles de courant secondaires contrôlant chacune chacun des transistors en fonction de l'intensité de référence.

De préférence, les transistors sont connectés entre le démarreur et une masse à un potentiel fixe.

Chacune des boucles de courant secondaires comprend avantageusement en série avec chacun des transistors un shunt de mesure de courant connecté à cette masse.

Fort avantageusement, la boucle de tension et les boucles de courant secondaires comprennent des moyens de contrôle analogiques, de préférence des amplificateurs opérationnels.

Dans le système de stabilisation d'une tension d'alimentation d'un réseau électrique de bord d'un véhicule automobile selon l'invention les transistors utilisés sont avantageusement de type MOSFET (acronyme de "Metal Oxyde Semiconductor Field Effect Transistor" en anglais, .c'est-à-dire "Transistor à Effet de Champ à Semi-conducteur à Oxyde Métallique")

L'invention concerne aussi un démarreur de véhicule automobile remarquable en ce qu'il comporte un système de stabilisation d'une tension d'alimentation d'un réseau électrique de bord présentant les caractéristiques ci-dessus intégré.

Ces quelques spécifications essentielles auront rendu évidents pour l'homme de métier les avantages du système de stabilisation d'une tension d'alimentation d'un réseau électrique de bord d'un véhicule automobile selon l'invention par rapport à l'état de la technique.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

Les **Figures 1a et 1b** montrent respectivement une chute de tension d'une batterie alimentant un réseau électrique de bord de véhicule automobile au moment du lancement du démarreur, et le pic d'intensité correspondant, sans le système de stabilisation (traits en pointillé) et avec le système de stabilisation selon l'invention (traits pleins).
La **Figure 2** est un schéma de principe simplifié d'un mode de réalisation préféré du système de stabilisation d'une tension d'alimentation d'un réseau électrique de bord d'un véhicule automobile selon l'invention.

### DESCRIPTION DES MODES DE REALISATION PREFERES DE L'INVENTION.

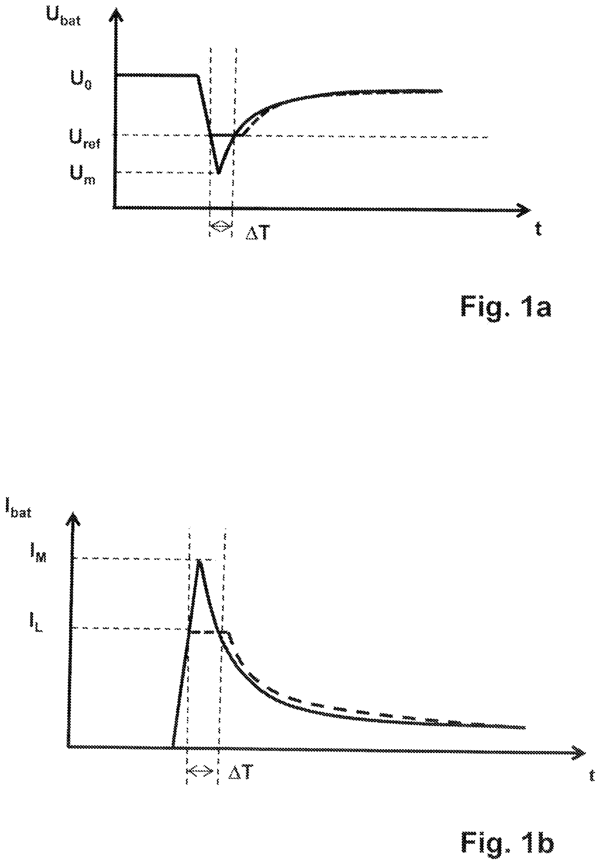

La **Figure 1a** montre en traits en pointillé l'évolution dans le temps de la tension U_{bat} aux bornes d'une batterie alimentant un réseau électrique de bord d'un véhicule automobile auquel est connecté un démarreur, au moment du lancement du moteur thermique, en l'absence de stabilisation.

A partir d'une valeur nominale U₀ (supposée positive) correspondant à une charge normale de la batterie, de l'ordre de 12 V, il se produit une variation de tension Uₘ - U₀ importante de la batterie, jusqu'au moment où, le moteur thermique étant lancé, la batterie revient à sa tension nominale U₀.

Le minimum de tension Uₘ peut être très inférieur à une tension de référence U_{ref}, de l'ordre de 7 à 9 V, fixée par les constructeurs d'automobiles comme seuil à ne pas dépasser.

Au minimum de tension Uₘ, correspond un pic d'intensité I_{M} du courant I_{bat} débité par la batterie, comme le montre bien la **Figure 1b** (traits en pointillé).

En intervenant pendant tout l'intervalle de temps ΔT où la tension U_{bat} de la batterie tend à devenir inférieure à la tension de référence U_{ref}, le système de stabilisation selon l'invention permet de maintenir la tension de batterie U_{bat} à cette tension de référence U_{ref}, comme le montre bien en traits pleins la **Figure 1a****.**

L'amplitude du pic d'intensité du courant débité I_{bat} sur le même intervalle ΔT est atténuée et présente une valeur limitée I_{L}, comme le montre bien en traits pleins la **Figure 1** **b.**

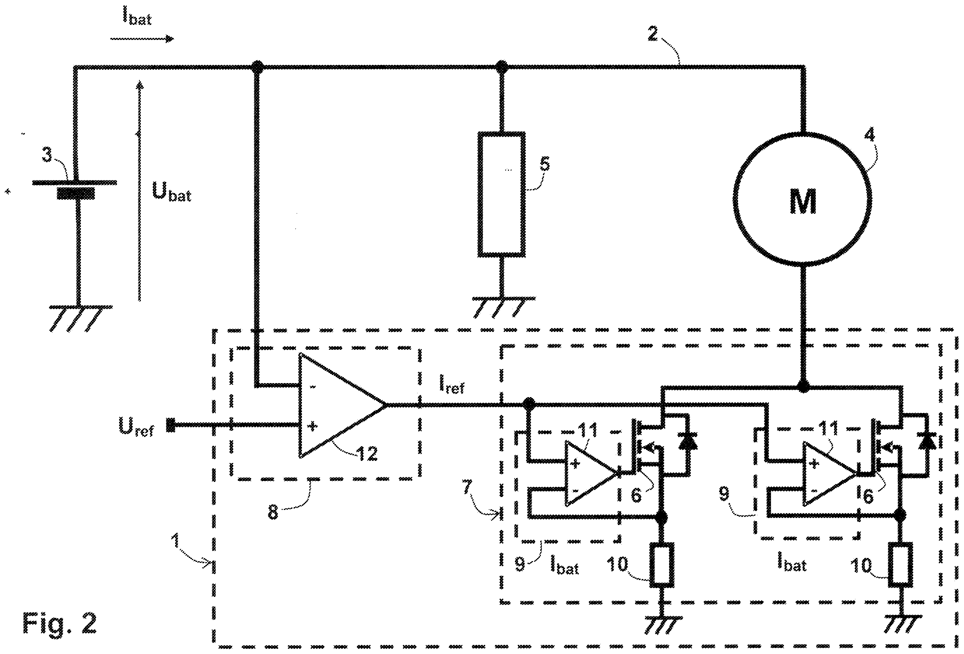

La **Figure 2** montre schématiquement la mise en oeuvre du système de stabilisation 1 selon l'invention dans un réseau électrique de bord 2 d'un véhicule automobile.

Une batterie 3 alimente ce réseau 2 (la masse étant connectée au pôle négatif de la batterie 3) auquel est relié un démarreur électrique 4, apte à être accouplé mécaniquement au moteur thermique du véhicule au moment du lancement de celui-ci.

Diverses autres charges électriques 5 sont habituellement reliées au réseau de bord 2.

Ce sont ces charges électriques 5 qui peuvent avoir un fonctionnement perturbé par la chute de tension de la batterie 3 au moment du démarrage.

Le système de stabilisation 1 selon l'invention est un régulateur linéaire conçu pour stabiliser la tension de batterie U_{bat} pendant la phase de démarrage, en limitant l'appel de courant I_{bat} du démarreur 4 pour maintenir la tension de batterie U_{bat} au moins à une tension de référence U_{ref}.

Le régulateur linéaire 1 comprend des transistors 6 de type MOSFET en parallèle formant une résistance variable en série avec le démarreur 4.

Tant que la tension de batterie U_{bat} reste au dessus de la tension de référence U_{ref}, les transistors 6 sont fermés (en régime saturé) et le régulateur 1 est équivalent à une simple résistance de faible valeur R_{DS_ON} (de l'ordre de 1 mΩ).

Quand la tension de batterie U_{bat} tombe en dessous de la tension de référence U_{ref} (variation de tension négative), le système de stabilisation 1 est activé et les transistors 6 commencent à fonctionner en régime linéaire comme une résistance variable pour limiter le courant I_{bat}.

Pendant cette phase, les transistors 6 sont commandés par deux boucles de régulation 7, 8, une boucle de courant principal 7 et une boucle de tension 8.

La boucle de courant principale 7, d'une part, contrôle le courant circulant dans le démarreur 4 en fonction d'une intensité de référence I_{ref}.

La boucle de tension 8, d'autre part, est en charge de fournir l'intensité de référence I_{ref} nécessaire pour maintenir la tension de batterie U_{bat}, qui est aussi celle du réseau 2, au dessus de la tension de référence U_{ref}.

En tenant compte de la dissipation thermique des transistors 6 travaillant en régime linéaire, il est nécessaire d'implémenter plusieurs transistors 6 en parallèle.

En effet, comme cela a déjà été indiqué, le démarrage du moteur thermique exige une intensité I_{bat} de l'ordre de 1000 A et il n'existe pas actuellement de transistor de puissance capable de supporter une telle intensité sous quelques volts, c'est-à-dire une puissance de plusieurs kilowatts, en régime linéaire.

Malheureusement, quel que soit le soin apporté à l'appariement des transistors 6 pour une caractéristique déterminée, par exemple la transconductance gₘ, la dispersion des autres paramètres (par exemple, la tension de seuil Vₜₕ) et les tolérances du montage mécanique conduit habituellement à des ensembles déséquilibrés.

Si plusieurs transistors 6 de type MOSFET sont connectés en parallèle sans résistance de grille, la tension grille-source est la même pour tous. Dans ces conditions, la tension de seuil Vₜₕ n'étant pas identique pour tous les transistors 6, il peut y avoir dans les pires des cas de très grandes différences dans le partage du courant.

Ce problème est même accru en utilisant la nouvelle génération de transistors MOSFET supportant des fortes intensités à cause de sa transconductance élevée. Pour une même tension grille-source de commande de chacun des transistors 6, les courants dans les transistors 6 peuvent très différents, et par conséquent, les dissipations thermiques peuvent être très différentes.

Le système de stabilisation 1 selon l'invention comporte donc une boucle de courant principale 7 formée de plusieurs boucles de courant secondaires 9 pour commander individuellement les transistors 6. De cette manière, la dissipation thermique des transistors 6 est équilibrée.

Chaque boucle de courant secondaire utilise un shunt 10 connecté à la masse pour mesurer un courant de source (dans le cas d'un MOSFET canal N tel que représenté; de drain, pour un MOSFET canal P) dans chaque transistor 6 représentant la même fraction du courant I_{bat} circulant dans le démarreur 4 et le comparer à l'intensité de référence I_{ref} au moyen d'un amplificateur opérationnel 11.

Cet amplificateur opérationnel 11 génère en sortie une tension grille-source qui commande l'impédance du transistor 6 en régime linéaire pour asservir le courant de source à la fraction de l'intensité de référence I_{ref} requise.

Chacun des transistors 6 disposant d'une contre-réaction, la même intensité de référence I_{ref}, ou plus exactement une tension représentative de cette intensité de référence I_{ref}, peut être appliquée sur tous les amplificateurs opérationnels 11 qui les pilotent, quel que soit le nombre de transistors 6 en parallèle.

La tension représentative de cette intensité de référence I_{ref} est générée par un autre amplificateur opérationnel 12 en fonction d'une différence de tension U_{ref} - U_{bat} de la batterie 3 par rapport à la tension de référence U_{ref}, la tension U_{bat} du réseau 2 étant appliquée à l'entrée inverseuse et la tension de référence U_{ref} étant appliquée à l'entrée non-inverseuse.

Le système de stabilisation 1 selon l'invention présente l'avantage d'éviter les problèmes de compatibilité électromagnétique parce qu'il travaille en régime linéaire, et non en commutation.

De plus, les moyens de contrôle des boucles de tension et de courant 7, 8, 9 étant analogiques, basés sur des amplificateurs opérationnels 11, 12, il n'est pas nécessaire d'utiliser des microcontrôleurs complexes.

Comme il va de soi, l'invention ne se limite pas aux seuls modes d'exécution préférentiels décrits ci-dessus.

Notamment, le type de transistors de puissance 6 cité n'est pas limitatif; l'utilisation d'autres éléments à semi-conducteurs susceptibles de réaliser les mêmes fonctions que les MOSFETs 6 ne sortirait pas du cadre de l'invention.

La mise en oeuvre d'amplificateurs opérationnels 11 intégrés n'est aussi qu'une possibilité pour réaliser les moyens de contrôle analogiques des boucles de courant 7, 9 ou de la boucle de tension 12; l'homme de métier pourra autant que de besoin implémenter les mêmes fonction à moindre coût avec des éléments actifs discrets ou hybrides.

L'invention embrasse toutes les variantes possibles de réalisation dans la limite de l'objet des revendications ci-après.

## Revendications

1. Système de stabilisation (1) d'une tension d'alimentation (U_{bat}) d'un réseau électrique de bord (2) d'un véhicule automobile, du type de ceux limitant une variation de tension d'une batterie (3) alimentant ledit réseau (2) au moment d'un démarrage d'un moteur thermique dudit véhicule au moyen d'un démarreur électrique (4) relié audit réseau (2), **caractérisé en ce qu'**il comprend une résistance variable (6) commandée en régime linéaire en fonction de ladite variation de tension, ladite résistance variable (6) étant connectée en série avec ladite batterie (3) et ledit démarreur (4) et contrôlée par une boucle de courant principale (7) en fonction d'une intensité de référence (I_{ref}) générée par une boucle de tension (8) en fonction de ladite variation de tension par rapport à une tension de référence (U_{ref}) ladite résistance (6) étant constituée de plusieurs transistors de puissance en parallèle.

2. Système de stabilisation (1) d'une tension d'alimentation (U_{bat}) d'un réseau électrique de bord (2) d'un véhicule automobile selon la revendication 1, **caractérisé en ce que** lesdits transistors (6) fonctionnent en régime saturé si ladite tension d'alimentation (U_{bat}) est supérieure ou égale en valeur absolue à ladite tension de référence (U_{ref}) en valeur absolue, ou en régime linéaire si ladite de tension d'alimentation (U_{bat}) est inférieure en valeur absolue à ladite tension de référence (U_{ref}) en valeur absolue.

3. Système de stabilisation (1) d'une tension d'alimentation (U_{bat}) d'un réseau électrique de bord (2) d'un véhicule automobile selon la revendication 2, **caractérisé en ce que** ladite boucle de courant principale (7) est formée de plusieurs boucles de courant secondaires (9) contrôlant chacune chacun desdits transistors (6) en fonction de ladite intensité de référence (I_{ref}).

4. Système de stabilisation (1) d'une tension d'alimentation (Ubat) d'un réseau électrique de bord (2) d'un véhicule automobile selon la revendication 3, **caractérisé en ce que** lesdits transistors (6) sont connectés entre ledit démarreur (4) et une masse à un potentiel fixe.

5. Système de stabilisation (1) d'une tension d'alimentation (U_{bat}) d'un réseau électrique de bord (2) d'un véhicule automobile selon la revendication 4, **caractérisé en ce que** chacune desdites boucles de courant secondaires (9) comprend en série avec chacun desdits transistors (6) un shunt de mesure de courant (10) connecté à ladite masse.

6. Système de stabilisation (1) d'une tension d'alimentation (U_{bat}) d'un réseau électrique de bord (2) d'un véhicule automobile selon la revendication 5, **caractérisé en ce que** ladite boucle de tension (8) et lesdites boucles de courant secondaires (9) comprennent des moyens de contrôle analogiques (11), de préférence des amplificateurs opérationnels.

7. Système de stabilisation (1) d'une tension d'alimentation (U_{bat}) d'un réseau électrique de bord (2) d'un véhicule automobile selon l'une quelconque des revendications 1 à 6, **caractérisé en ce que** lesdits transistors (6) sont de type MOSFET.

8. Démarreur de véhicule automobile, **caractérisé en ce qu'**il comporte un système de stabilisation (1) d'une tension d'alimentation (U_{bat}) d'un réseau électrique de bord (2) selon l'une quelconque des revendications 1 à 7 intégré.

## Patentansprüche

1. System zur Stabilisierung (1) einer Versorgungsspannung (U_{bat}) eines elektrischen Bordnetzes (2) eines Kraftfahrzeugs, vom Typ jener, die eine Spannungsvariation einer Batterie (3), die das Netz (2) versorgt, zum Zeitpunkt eines Startens eines Verbrennungsmotors des Fahrzeugs mit Hilfe eines elektrischen Starters (4), der mit dem Netz (2) verbunden ist, begrenzen, **dadurch gekennzeichnet, dass** es einen variablen Widerstand (6) umfasst, der in linearem Betrieb in Abhängigkeit von der Spannungsvariation gesteuert wird, wobei der variable Widerstand (6) in Serie mit der Batterie (3) und dem Starter (4) geschaltet ist und von einer Hauptstromschleife (7) in Abhängigkeit von einer Referenzstromstärke (I_{ref}), die von einer Spannungsschleife (8) in Abhängigkeit von der Spannungsvariation in Bezug zu einer Referenzspannung (U_{ref}) erzeugt wird, kontrolliert wird,
wobei der Widerstand (6) von mehreren parallel geschalteten Leistungstransistoren gebildet ist.

2. System zur Stabilisierung (1) einer Versorgungsspannung (U_{bat}) eines elektrischen Bordnetzes (2) eines Kraftfahrzeugs nach Anspruch 1, **dadurch gekennzeichnet, dass** die Transistoren (6) im gesättigten Betrieb funktionieren, wenn die Versorgungsspannung (U_{bat}) im Absolutwert größer oder gleich der Referenzspannung (U_{ref}) im Absolutwert ist, oder im linearen Betrieb, wenn die Versorgungsspannung (U_{bat}) im Absolutwert kleiner als die Referenzspannung (U_{ref}) im Absolutwert ist.

3. System zur Stabilisierung (1) einer Versorgungsspannung (U_{bat}) eines elektrischen Bordnetzes (2) eines Kraftfahrzeugs nach Anspruch 2, **dadurch gekennzeichnet, dass** die Hauptstromschleife (7) von mehreren Nebenstromschleifen (9) gebildet ist, die jeweils jeden der Transistoren (6) in Abhängigkeit von der Referenzstromstärke (I_{ref}) kontrollieren.

4. System zur Stabilisierung (1) einer Versorgungsspannung (U_{bat}) eines elektrischen Bordnetzes (2) eines Kraftfahrzeugs nach Anspruch 3, **dadurch gekennzeichnet, dass** die Transistoren (6) zwischen dem Starter (4) und einer Masse an ein festes Potential angeschlossen sind.

5. System zur Stabilisierung (1) einer Versorgungsspannung (U_{bat}) eines elektrischen Bordnetzes (2) eines Kraftfahrzeugs nach Anspruch 4, **dadurch gekennzeichnet, dass** jede der Nebenstromschleifen (9) in Serie mit jedem der Transistoren (6) einen Strommessshunt (10) umfasst, der an die Masse angeschlossen ist.

6. System zur Stabilisierung (1) einer Versorgungsspannung (U_{bat}) eines elektrischen Bordnetzes (2) eines Kraftfahrzeugs nach Anspruch 5, **dadurch gekennzeichnet dass** die Spannungsschleife (8) und die Nebenstromschleifen (9) analoge Kontrollmittel (11), vorzugsweise Operationsverstärker, umfassen.

7. System zur Stabilisierung (1) einer Versorgungsspannung (U_{bat}) eines elektrischen Bordnetzes (2) eines Kraftfahrzeugs nach einem der Ansprüche 1 bis 6, **dadurch gekennzeichnet, dass** die Transistoren (6) vom Typ MOSFET sind.

8. Starter eines Kraftfahrzeugs, **dadurch gekennzeichnet, dass** er ein System zur Stabilisierung (1) einer Versorgungsspannung (U_{bat}) eines elektrischen Bordnetzes (2) nach einem der Ansprüche 1 bis 7 integriert umfasst.

## Claims

1. System for stabilizing (1) a supply voltage (U_{bat}) of an onboard electrical network (2) of a motor vehicle, of the type of those limiting a voltage variation of a battery (3) supplying said network (2) at the time of a startup of a heat engine of said vehicle by means of an electric starter (4) linked to said network (2), **characterized in that** it comprises a variable resistor (6) controlled linearly as a function of said voltage variation, said variable resistor (6) being connected in series with said battery (3) and said starter (4) and controlled by a main current loop (7) as a function of a reference intensity (I_{ref}) generated by a voltage loop (8) as a function of said voltage variation relative to a reference voltage (U_{ref}) said resistor (6) being made up of several power transistors in parallel.

2. System for stabilizing (1) a supply voltage (U_{bat}) of an onboard electrical network (2) of a motor vehicle according to Claim 1, **characterized in that** said transistors (6) operate in saturated mode if said supply voltage (U_{bat}) is, in absolute value terms, greater than or equal to said reference voltage (U_{ref}) in absolute value terms, or in linear mode if said supply voltage (U_{bat}) is, in absolute value terms, less than said reference voltage (U_{ref}) in absolute value terms.

3. System for stabilizing (1) a supply voltage (U_{bat}) of an onboard electrical network (2) of a motor vehicle according to Claim 2, **characterized in that** said main current loop (7) is formed by several secondary current loops (9) each controlling each of said transistors (6) as a function of said reference intensity (I_{ref}).

4. System for stabilizing (1) a supply voltage (U_{bat}) of an onboard electrical network (2) of a motor vehicle according to Claim 3, **characterized in that** said transistors (6) are connected between said starter (4) and a ground with a fixed potential.

5. System for stabilizing (1) a supply voltage (U_{bat}) of an onboard electrical network (2) of a motor vehicle according to Claim 4, **characterized in that** each of said secondary current loops (9) comprises, in series with each of said transistors (6), a current measuring shunt (10) connected to said ground.

6. System for stabilizing (1) a supply voltage (U_{bat}) of an onboard electrical network (2) of a motor vehicle according to Claim 5, **characterized in that** said voltage loop (8) and said secondary current loops (9) comprise analogue control means (11), preferably operational amplifiers.

7. System for stabilizing (1) a supply voltage (U_{bat}) of an onboard electrical network (2) of a motor vehicle according to any one of Claims 1 to 6, **characterized in that** said transistors (6) are of MOSFET type.

8. Motor vehicle starter, **characterized in that** it comprises a system for stabilizing (1) a supply voltage (U_{bat}) of an onboard electrical network (2) according to any one of Claims 1 to 7 integrated.
